# EUROPÄISCHE PATENTANMELDUNG

(11) **EP 2 312 525 A2**
(43) Veröffentlichungstag der Anmeldung: **20.04.2011**
(21) Anmeldenummer: 10180695.8
(22) Anmeldetag: 28.09.2010
(51) Int. Cl.: G06T 3/40, G06K 9/32

(54) **Verfahren und Kamerasystem zur Erzeugung von Bildern zur Übermittlung an eine externe Steuereinheit**

(30) Priorität: 01.10.2009 DE 102009043705
(71) Anmelder: Silicon Micro Sensors GmbH, 01099 Dresden (DE)
(72) Erfinder: Busse, Erik, 04600 Altenburg (DE); Prinz von Hessen, Wilhelm, 01445 Radebeul (DE)
(74) Vertreter: Lippert, Stachow & Partner

(57) **Zusammenfassung**

Es wird ein Verfahren und ein dazu verwendbares und konfiguriertes Kamerasystem angegeben, mit welchen Quellbilder 20 mit hoher, durch einen Bildsensor 1 bestimmten Auflösung mittels eines Prozessors 8 derart verarbeitet werden, dass infolge einer Abwärtsskalierung der Auflösung des Quellbildes 20 eine Bildkopie 24 erzeugt wird, welche auf eine externe Steuereinheit übertragen und in dieser verarbeitet werden kann. Darüber hinaus wird ein Bildausschnitt 32 höherer Auflösung, verglichen mit der Bildkopie 24, aus dem Quellbild 20 erzeugt und ebenfalls zur externen Steuereinheit übertragen. Damit ist es möglich, einer Steuereinheit Detailinformationen in dem für die Steuereinheit zu verarbeitendem Format zur Verfügung zu stellen. (Fig. 3A)

## Beschreibung

Die Erfindung betrifft ein Verfahren zur Erzeugung von Bildern zur Übermittlung an eine externe Steuereinheit und ein dazu verwendbares Kamerasystem.

Derartige Kamerasysteme und Bilderzeugungs- und Bildverarbeitungsverfahren werden in verschiedenen Anwendungen eingesetzt, um Maschinen, Anlagen oder technische Prozesse zu steuern oder zu regeln. Zur Erfassung der aktuellen Situation oder zur Prognose zu erwartender Situationen werden ein Bild oder eine Folge von mehreren Bildern aufgenommen, aus denen die erforderlichen Informationen zu erhalten. Die Bildauswertung erfolgt mittels geeigneter Prozessoren, die Bestandteil von elektronischen Kontrolleinheiten (Electronic Control Unit - ECU) sind.

Die ECU's sind anwendungsspezifische Boards, auf denen auch die Software integriert ist, die für die Bilderkennung und - bearbeitung erforderlich ist, so dass mittels der ECU letztendlich Reaktionen auf die gewonnenen Informationen erfolgen können. Diese können sehr unterschiedlich erfolgen. Z.B. ist die Ausgabe eines Signals möglich, die Anforderung von weiteren Bildern oder ebenso der direkte Eingriff in die Steuerung der Maschinen, Anlagen oder Prozesse. Da die ECU's meist in komplexe Systeme eingebettet sind, sind gültige Standards zu realisieren um die Kompatibilität aller Komponenten des Systems zu gewährleisten. In Bezug auf Kamera- und grafische Systeme sind das derzeit der VGA- und PAL/NTSC-Standard, die hier bezüglich ihrer Bildrate und Auflösung, die für VGA bei 640 x 480, für PAL bei 720H x 576V sowie für NTSC bei 720H x 480V liegt, von Interesse sind.

Um die relevanten Informationen in einem Bild zu identifizieren, sind die geometrischen Strukturen mit hoher Auflösung darzustellen, so dass Vergleiche mit bekannten, gespeicherten Strukturen möglich und die aufgenommenen Strukturen als bekannt oder unbekannt zu kennzeichnen sind. Hierbei hängt es von der jeweils zu realisierenden Steuerung ab, ob die bekannten oder die unbekannten Strukturen die für die Steuerung relevanten Informationen liefern. So ist es z.B. für Fahrer-Assistenzsysteme erforderlich, sowohl Verkehrszeichen und -markierungen als auch voranfahrende Fahrzeuge oder plötzlich auftretende Hindernisse zu erkennen. Demgegenüber sind z.B. für die Sicherheit im Personenverkehr oder für automatisierte Fabrikationsprozesse völlig andere Strukturen zu erkennen und Informationen zu verarbeiten. Dabei besteht in zunehmenden Anwendungsgebieten die Forderung, die Bildauswertung einschließlich daraus schlussfolgernder Reaktionen eines Kontroll- und/oder Steuersystems rein rechnergestützt vorzunehmen.

Z.B. wird in der WO 01/39018 A1 ein Kamerasystem mit Bildsensor und Prozessor zur Bildverarbeitung sowie ein Verfahren zur Bildverarbeitung beschrieben, welches der autonomen und computersichtbasierten Fahrtunterstützung für Fahrzeuge dient. Darin nimmt eine Kamera fortlaufend die Umgebung auf, analysiert die aufgenommenen Bilder und ermittelt daraus die Möglichkeit und den Zeitpunkt von Kollisionen mit aufgenommenen Objekten. Das Kamerasystem unterscheidet dabei aufgrund gespeicherter geometrischer Strukturen z.B. zwischen Fahrbahnmarkierungen, Fußgängern, anderen Fahrzeugen oder Verkehrszeichen. Zur Ermittlung eines Kollisionszeitpunktes werden während der Bewegung des Fahrzeugs Bilder mit den als relevant detektierten Objekten mehrmals nacheinander aufgenommen und mit einem Prozessor geeignet ausgewertet. Dazu ist es erforderlich, Abmessungen eines mehrfach aufgenommenen Objekts miteinander ins Verhältnis zu setzten.

Entsprechend hoch sind für solche und vergleichbare Aufgabenstellungen die Anforderungen an die Bildfolge sowie an den Informationsgehalt und an die Auflösung eines einzelnen Bildes, um auch die Informationen abzubilden, die für die jeweilige Steuerung benötigt werden. Für Fahrer-Assistenzsysteme z.B. ist es wünschenswert, Objekte möglichst weit voraus und gleichermaßen neben dem Fahrweg bei hohem Öffnungswinkel des seitlichen Blicks zu erkennen.

Im Ergebnis werden immer größere und mehr Bildsensoren eingesetzt, die eine immer dichtere Bildfolge aufnehmen, so dass die übermittelnde und zu verarbeitende Datenmenge nichtlinear wächst. Dem entgegen stehen jedoch die oben genannten, derzeit für die ECU's geltenden Standards, die die zu verarbeitende Auflösung und Bildfolge begrenzen.

Der Erfindung liegt somit die Aufgabe zugrunde, ein Kamerasystem und ein Bildverarbeitungsverfahren anzugeben, mit welchem einer Steuereinheit Detailinformationen in dem für die Steuereinheit zu verarbeitendem Format zur Verfügung gestellt werden können.

Mit dem nachfolgend beschriebenen Kamerasystem sind Bildaufnahmen in hoher, durch den Bildsensor bestimmten Auflösung möglich, während die an eine Steuereinheit zu übertragenden Bilder einen deutlich geringeren Datenumfang in dem für die Steuereinheit verarbeitbaren Datenformat erzeugt werden. Als hoch wird eine Auflösung von mindestens 1 Megapixel angesehen, im Vergleich zu dem VGA-Standard mit einer Auflösung von derzeit in solchen Systemen verarbeitbaren 640 x 480 Pixel. Das beschriebene Verfahren und das dazu verwendbare Kamerasystem können auch wesentlich höher auflösendere Bildsensoren von mehreren Megapixel verwenden, ohne Veränderungen an den anwenderspezifischen Boards und Standard-ECU's zu erfordern und dennoch ohne Informationsverlust.

Erfindungsgemäß ermöglicht das eine bereits im Kamerasystem und damit unabhängig von der ECU und dezentral vorgenommene Bildverarbeitung. Diese Bildverarbeitung ist von einer die Aufnahme ändernden Bildbearbeitung zu unterscheiden, die während oder unmittelbar nach der Aufnahme mittels eines geeigneten Prozessors des Kamerasystems vorgenommen wird und die z.B. Einstellung der Bildhomogenität hinsichtlich Schärfe und Helligkeit, Unterdrückung von Bildrauschen o.a. betrifft. Diese Art der Bildbearbeitung kann vor der nachfolgend beschriebenen Bildverarbeitung ergänzend erfolgen, sofern erforderlich.

Der Begriff der Bildverarbeitung im hier verwendeten Sinn sind die Maßnahmen zu verstehen, die an der fertig gestellten Aufnahme erfolgen um diese so zu verändern, dass sie einer nachgeschalteten Steuereinheit bereitgestellt werden kann. Die durch das erfindungsgemäße Kamerasystem realisierbare Bildverarbeitung ermöglicht eine Minimierung des Datenverkehrs zur ECU ohne dass hinsichtlich der Anforderungen oder der darin hinterlegten und zu prüfenden Informationen Änderungen oder Abstriche vorgenommen werden müssen. Das ist insbesondere aufgrund der üblicherweise fortlaufenden Überwachung mit ununterbrochener Bildfolge günstig, wodurch bereits an sich hohe Datenmengen entstehen.

Es sind automatisierte Zooms anhand der Vorgaben durch die ECU in einmal aufgenommene Bilder mit realem Zoom-Effekt möglich. Die dadurch gewonnenen Bildausschnitte weisen keinen Verlust in der Bildschärfe oder in anderen Informationen auf.

Mithilfe des erfindungsgemäßen Bildverarbeitungsverfahrens wird an die ECU ein Übersichtsbild übermittelt, welches nachfolgend als Bildkopie bezeichnet ist. Diese Bildkopie weist zwar die gegenüber dem mit dem hochauflösenden Bildsensor aufgenommenem Quellbild verringerte Auflösung auf, ist aber im Kamerasystem als hochaufgelöst abrufbar, so dass für den Fall, dass dieses Bild eine relevante Information enthält, gewissermaßen ein Zoom in die hohe Auflösung des Quellbildes möglich ist und der dem Quellbild entnommene und an die Steuereinheit ebenfalls übermittelte Bildausschnitt wiederum die von der ECU geforderte, für den Bildausschnitt jedoch voll ausgeschöpfte Auflösung aufweist.

Die Erzeugung eines derart automatisierten Zooms erfolgt anhand zumindest einer so genannten interessierenden Region, auch als RoI (Region of Interest) bezeichnet, die in jene Bereiche des Aufnahmefensters gelegt werden, in denen üblicherweise relevante Informationen erwartet werden. Bezogen auf Fahrer-Assistenzsysteme kann das z.B. der rechte obere Bildrand zur Erkennung von Verkehrszeichen sein. Sollen Abstände zu vorausfahrenden Fahrzeugen kontrolliert werden, ist eine zentrale Region von Interesse. Dementsprechend sind die RoI durch den Anwender in Bezug auf den Montageort und den Blickwinkel der Kamera vordefiniert.

Gleichermaßen sind auch die als relevant eingestuften Informationen und die daraus resultierenden geometrischen Strukturen, nach denen in den RoI gesucht werden müssen, durch den Anwendungsfall des Kamerasystems vorgegeben. Erfindungsgemäß wird nach diesen Strukturen jedoch bereits im Kamerasystem und damit im hochaufgelösten Bild gesucht. An die ECU übermittelt werden dann die vorausgewerteten Daten, die vergleichen mit den Eingangsdaten deutlich reduziert sein.

Der Vorteil der Kompatibilität der vorausgewerteten Bilder an die Standards der ECU als Empfänger der Informationen ist auch dadurch gewährleistet, dass bereits im Kamerasystem Konvertierungen an das Datenformat der ECU erfolgen können. Damit kann ein kompatibles aber von ECU entkoppelteres System zur Verfügung gestellt werden, mit dem auf aktuelle Entwicklungen in der Bildaufnahme und -bearbeitung flexibler reagiert werden kann.

Eine solche im Kamerasystem integrierte Intelligenz gestattet darüber hinaus auch externe Eingriffe insbesondere von der ECU. Dies kann z.B. erforderlich sein, wenn sich aufgrund der aufgefundenen Informationen Folgebilder notwendig machen, mit denen ein zeitlicher Ablauf verfolgt werden soll, wie es z.B. für eine Kollisionswarnung erforderlich sein kann. Eine solche zeitliche Abfolge von Bildern kann durch die ECU zum einen dadurch realisiert werden, dass ein RoI fortlaufend beobachtet wird, ob ein einmal identifiziertes Objekt sich darin befindet. Andererseits kann auch gezielt fortlaufend in eine RoI gezoomt werden, um diese zu überwachen. In beiden Fällen erfolgt zusätzlich zu dem fortlaufendem Datenstrom zur ECU die Übertragung der gezoomten Bildausschnitte der RoI, in ersterem Fall nur wenn das Objekt erneut festgestellt wird, in zweitem Fall für eine zeitlich definierte Bildabfolge.

Entsprechend dem jeweiligen Anwendungsgebiet für das erfindungsgemäße Kamerasystem können die Bilder sowohl als Farb- als auch als Schwarz-Weiß-Aufnahmen verarbeitet werden. Beispielsweise in der Landwirtschaft können aus der Farbe weitere Informationen gewonnen werden. Wenn dies jedoch nicht erforderlich ist, sind Schwarz-Weiß-Aufnahmen von Vorteil, da sie eine bessere Auflösung und bessere Übergänge liefern, was die Erkennbarkeit der geometrischen Strukturen verbessert und da sie darüber hinaus mit den Algorithmen der Bildverarbeitung leichter zu handhaben sind.

Die Erfindung soll nachfolgend anhand eines Ausführungsbeispieles näher erläutert werden. In der zugehörigen Zeichnung zeigt
- Fig. 1: ein erfindungsgemäßes Kamerasystem
- Fig. 2A: ein Quellbild, aufgenommen mit dem Bildsensor eines erfindungsgemäßen Kamerasystems,
- Fig. 2B: eine Bildkopie des Quellbildes der Fig. 2A,
- Fig. 3A: ein Quellbild mit Darstellung von zwei interessierenden Regionen (RoI) und
- Fig. 3B: einen Bildausschnitt, der eine der interessierenden Regionen der Fig. 3A darstellt.

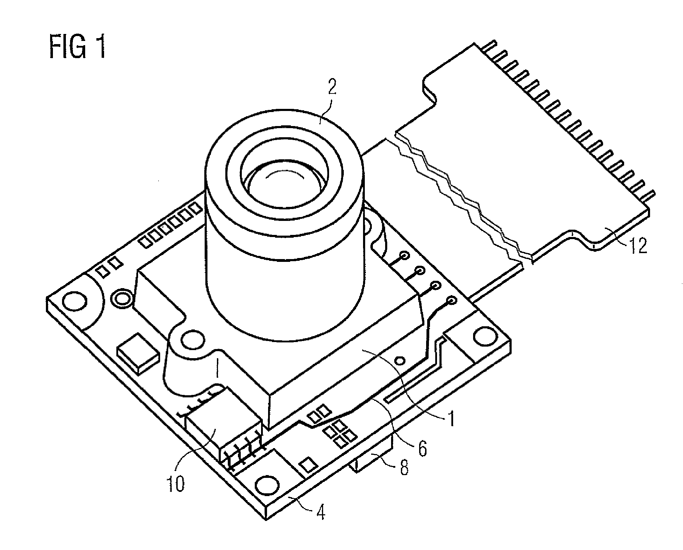

Fig. 1 zeigt den grundsätzlichen Aufbau eines erfindungsgemäßen Kamerasystems, das konzipiert ist für die Integration in eine Maschinen-, Anlagen- oder Prozessüberwachung und für die Verbindung mit einer elektronischen Kontrolleinheit, einer ECU (nicht dargestellt), in welcher alle erforderlichen Überwachungs-und Steuerparameter hinterlegt sind, einen Anschluss 12 aufweist.

Das Kamerasystem umfasst einen Bildsensor 1, auf welchem eine Aufnahmeoptik 2 montiert ist. Bildsensor 1 und Aufnahmeoptik 2 sind auf einem Board 4 montiert, welches Leiterbahnen 6 aufweist zur elektrischen Verbindung der elektronischen Komponenten des Kamerasystems. Der Steuerung der Bildaufnahme und gegebenenfalls der Aufnahmeoptik 2 dient ein Prozessor 8, der im Ausführungsbeispiel auf der dem Bildsensor 1 gegenüber liegenden Rückseite des Boards 4 montiert ist. Auf dem Board 4 ist weiterhin eine Speichereinrichtung 10 montiert, die der Speicherung der aufgenommenen und durch die Bildverarbeitung erzeugten Bilder dient. Die Konfiguration das Zusammenwirken von Prozessor 8 und Speichereinrichtung 10 ergibt sich aus der nachfolgenden Beschreibung des Bildverarbeitungsverfahrens, wobei das Kamerasystem weitere, übliche Komponenten für das jeweilige Anwendungsgebiet oder für die Bildbearbeitung umfassen kann.

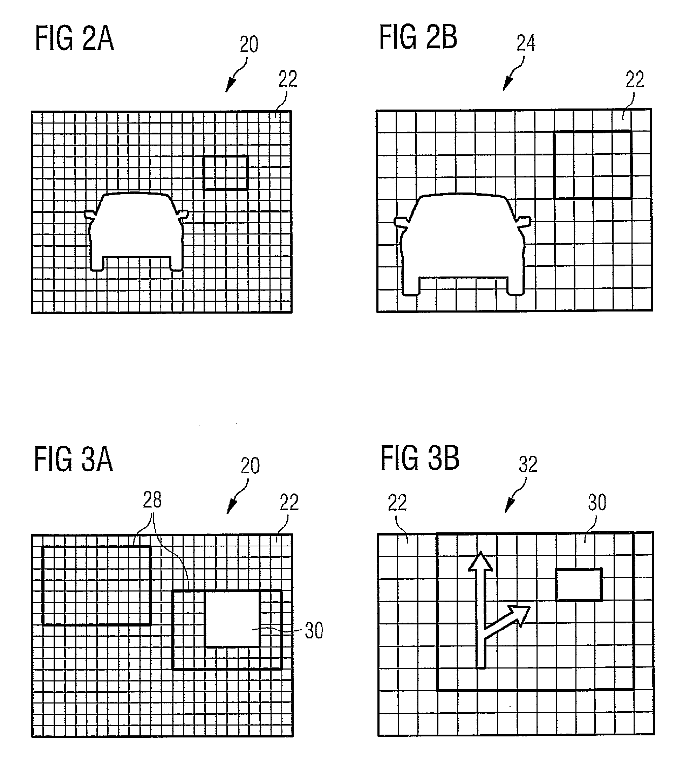

Fig. 2A zeigt ein Quellbild 20, welches mittels des Bildsensors 1 aufgenommen und in der Speichereinrichtung 10 gespeichert wurde. Schematisch die Auflösung des Quellbildes 20 in Form einer Rasterung dargestellt. Das Rastermaß und somit die Bildauflösung kann hier jedoch nur im Vergleich zu den anderen Figuren und keinesfalls absolut dargestellt werden, so dass das dichtere Rastermaß in Fig. 2A das hochaufgelöste Quellbild 20 mit z.B. 1,3 Megapixel darstellen soll. Ein Quadrat des Rasters symbolisiert ein Pixel 22.

Mittels des Prozessors 8 wird eine Bildkopie 24 des Quellbildes 20 hergestellt (Fig. 2B) und ebenfalls in der Speichereinheit 10 gespeichert. Die Erzeugung der Bildkopie 24 erfolgt, indem mehrere benachbarte, beispielhaft vier ein Quadrat bildende Pixel 22 zu einem Makropixel 26 zusammengefasst werden, und zwar für das gesamte Quellbild 20, so dass sich die Auflösung der Bildkopie 24 gegenüber dem Quellbild 20 viertelt. Der Skalierungsfaktor der Auflösung ist 1/4. Der Skalierungsfaktur bestimmt sich aus der Pixelzahl des Quellbildes 20 und dem Auflösungsstandard der Steuereinheit (nicht dargestellt), auf den die Auflösung des Quellbildes reduziert werden soll. Die Bildkopie 24 wird über den Anschluss 12 zu einer nicht dargestellten Steuereinheit übertragen.

Vor dieser Abwärtsskalierung der Auflösung erfolgt eine Überprüfung des unskalierten Quellbildes 20 auf vorbestimmte geometrische Strukturen, die durch den Anwender definiert und in der Speichereinrichtung 10 hinterlegt sind. Diese Überprüfung erfolgt in ausgewählten Bereichen des Quellbildes 20, in denen die jeweiligen geometrischen Strukturen 30 üblicherweise erwartet werden. Diese Bereiche sind als interessierende Regionen 28 oder RoI (Region of Interest) bezeichnet. Im Quellbild 20 sind beispielhaft zwei RoI 28 dargestellt. In einem davon ist eine geometrische Struktur 30, z.B. ein rechteckiges Verkehrsschild, identifiziert.

Von der die geometrische Struktur 30 aufweisenden RoI 28 wird mittels des Prozessors 8 und ausgehend von dem unskalierten Quellbild 20 ein Bildausschnitt 32 erzeugt. Dieser wird nur gering oder nicht skaliert, im Ausführungsbeispiel letzteres, so dass dieser zwar ebenfalls an den Auflösungsstandard der Steuereinheit angepasst ist, die Bildinformationen aber dennoch detailliert genug darstellt, um für eine weitere Auswertung in der Steuereinheit verwertbar zu sein. Die Pixel 22 des Bildausschnitts 32 entsprechen somit den Pixeln 22 des Quellbildes 20.

Um mit dem Bildausschnitt 32 eine optimale Bildinformation entnehmen zu können, ist es günstig, den Bildausschnitts 32 unskaliert zu übertragen. In diesem Fall ergibt sich die Pixelanzahl und somit Größe der RoI 28 aus dem Auflösungsstandard der Steuereinheit multipliziert mit dem reziproken Skalierungsfaktor. Umfasst die RoI 28 mehr Pixel 22, ist zur Anpassung an den Standard auch für die Erzeugung des Bildausschnitts 32 eine Abwärtsskalierung erforlich. Diese sollte aber so nah wie möglich bei Eins liegen, da damit der größtmögliche Informationsgehalt für die Steuereinheit bereit gestellt werden kann. In der festgelegten Größe kann eine oder mehrere RoI 28 beliebig auf dem Quellbild 20 platziert werden.

Obwohl die Beschreibung anhand eines Kamerasystems erfolgte, welches für die Fahrer-Unterstützung im Straßenverkehr verwendet wird, ist damit keine Beschränkung auf dort üblicherweise zu verarbeitende Bildinformationen und daraus resultierende besondere Algorithmen beabsichtigt. In vergleichbarer Weise kann das Kamerasystem und das Bildaufnahme- und Bildverarbeitungsverfahren auch für andere Bereiche verwendet werden, sowohl bei sich bewegenden als auch bei stationären Kamerasystemen.

### Bezugszeichenliste

- 1: Bildsensor
- 2: Aufnahmeoptik
- 4: Board
- 6: Leiterbahnen
- 8: Prozessor
- 10: Speichereinrichtung
- 12: Anschluss
- 20: Quellbild
- 22: Pixel
- 24: Bildkopie
- 26: Makropixel
- 28: interessierende Region, RoI
- 30: geometrische Struktur
- 32: Bildausschnitt

## Patentansprüche

1. Verfahren zur Erzeugung von Bildern und deren Übermittlung an eine externe Steuereinheit, folgende Schritte umfassend:
- Aufnahme eines Quellbildes (20) mit hoher Auflösung, welche durch den der Aufnahme dienenden Bildsensor (1) bestimmt ist,
- Herstellung einer Bildkopie (24) des Quellbildes (20) mittels eines Prozessors (8), wobei die Bildkopie (24) aus Makropixel (26) mit im Vergleich zum Quellbild (20) abwärts skalierter Auflösung besteht und jedes Makropixel (26) durch Zusammenfassen einer vordefinierte Menge benachbarter Pixel (22) des Quellbildes (20) gebildet wird, so dass die Anzahl der Pixel (22) pro Makropixel (26) den Skalierungsfaktor darstellt,
- Vergleich eines vordefinierten Bereichs des Quellbildes (20), welcher nachfolgend als interessierende Region (28) bezeichnet wird, mit zumindest einer gespeicherten geometrischen Struktur (30),
- Herstellen eines Bildausschnitts (32) der interessierenden Region (28) des Quellbildes (20), wenn in der interessierenden Region (28) besagte geometrische Struktur (30) enthalten ist, und
- Übermittlung der Bildkopie (24) und des Bildausschnitts (32), sofern diese zuvor hergestellt wurde, an eine externe Steuereinheit.

2. Verfahren nach Verfahrensanspruch 1, wobei die Auflösung der Bildkopie (24) und/oder des Bildausschnitts (32) einem Grafikkartenstandard entspricht.

3. Verfahren nach den Verfahrensansprüchen 1 oder 2, wobei der Bildausschnitt (32) unskaliert ist.

4. Verfahren nach einem der Verfahrensansprüche 1 bis 3, wobei die externe Steuereinheit die Aufnahme zumindest eines weiteren Quellbildes (20) initiiert, welches den Inhalt des ersten Quellbildes (20) zu einem späteren Zeitpunkt abbildet und dessen interessierende Region (28) erneut nach besagter geometrischer Struktur (30) zur möglichen Herstellung eines weiteren Bildausschnitts (32) untersucht wird.

5. Verfahren nach einem der Verfahrensansprüche 1 bis 3, wobei die externe Steuereinheit die Übermittlung zumindest eines weiteren Bildausschnitts (32) initiiert, welcher aus der interessierenden Region (28) eines zu einem späteren Zeitpunkt aufgenommenen Quellbildes (20) hergestellt ist, unabhängig davon, ob in dessen interessierender Region (28) besagte geometrische Struktur (30) aufgefunden wurde oder nicht.

6. Verfahren nach einem der vorstehenden Verfahrensansprüche, wobei die interessierende Region (28) durch seine Lage zu den Rändern des Quellbildes (20) und seine Größe bestimmt wird.

7. Verfahren nach einem der vorstehenden Verfahrensansprüche, wobei das Quellbild (20) in Schwarz-Weiß aufgenommen wird.

8. Kamerasystem zur Erzeugung von Bildern für deren Übermittlung an eine externe Steuereinheit, folgende Komponenten umfassend:
- einen Bildsensor (1) zur Aufnahme von Bildern,
- eine Speichereinrichtung (10) zur Speicherung von Bildinformationen und geometrischen Strukturen (30),
- einen Anschluss (12), konfiguriert zur Verbindung mit einer externen Steuereinheit und zur Übertragung von Bildinformationen an diese Steuereinheit,
- einen Prozessor (8) zur Verarbeitung eines aufgenommenen Quellbildes (20), wobei der Prozessor (8) dazu konfiguriert ist, eine Abwärtsskalierung der Auflösung des Quellbildes (20) vorzunehmen, indem eine Mehrzahl benachbarter Pixel (22) zu einem Makropixel (26) zusammengefasst werden und so eine Bildkopie (24) zu erstellen, welche sich aus den Makropixel (26) zusammensetzt,
- wobei der Prozessor (8) weiter dazu konfiguriert ist, den Inhalt eines vordefinierten Bereichs des Quellbildes (20), welcher nachfolgend als interessierende Region (28) bezeichnet wird, mit zumindest einer in der Speichereinrichtung (10) gespeicherten geometrischen Struktur (30) zu vergleichen und bei Auffinden dieser geometrischen Struktur (30) einen Bildausschnitt (32) von der interessierenden Region (28) herzustellen, und
- wobei der Prozessor (8) weiter dazu konfiguriert ist, Bildinformationen zu übertragen.

9. Kamerasystem nach Vorrichtungsanspruch 7, wobei die Bildkopie (24) und/oder der unskalierte Bildausschnitt (32) eine Auflösung aufweisen, welche jener eines Grafikkartenstandards entspricht.

10. Kamerasystem nach einem der vorstehenden Vorrichtungsansprüche, wobei der Prozessor (8) weiter dazu konfiguriert ist, ein externes Signal zu empfangen, welches die Aufnahme eines Quellbildes (20) und/oder die Herstellung eines Bildausschnitts (32) eines zuvor aufgenommenen und/oder in der Speichereinrichtung (10) gespeicherten Quellbildes (20) initiiert.

11. Kamerasystem nach einem der vorstehenden Vorrichtungsansprüche, wobei der Bildsensor (1) eine Auflösung von 1 Megapixel oder mehr aufweist.
